# EUROPEAN PATENT SPECIFICATION

(11) **EP 1 965 502 B1**
(45) Date of publication and mention of the grant of the patent: **24.11.2010**
(21) Application number: 07445007.3
(22) Date of filing: 28.02.2007
(51) Int. Cl.: H04B 1/18

(54) **Antenna device and portable radio communication device comprising such antenna device**
Antennenvorrichtung und tragbare Funkkommunikationsvorrichtung damit
Dispositif d'antenne et dispositif de communication radio portable comportant un tel dispositif d'antenne

(43) Date of publication of application: 03.09.2008
(73) Proprietor: Laird Technologies AB, 164 22 Kista (SE)
(72) Inventor: Kaikkonen, Andrei, 16471 Kista (SE); Lindberg, Peter, 75229 Uppsala (SE)
(74) Representative: Estreen, Lars J.F.

(56) References cited:
- EP-A- 1 168 487
- WO-A-2004/084427
- WO-A-2006/013843
- JP-A- 63 179 669
- US-A- 6 115 585

## Description

### FIELD OF INVENTION

The present invention relates generally to antenna devices and more particularly to an antenna device for use in a radio communication device, such as a mobile phone, which is adapted for radio signals having a relatively low frequency, such as radio signals in the FM band.

### BACKGROUND

Internal antennas have been used for some time in portable radio communication devices. There are a number of advantages connected with using internal antennas, of which can be mentioned that they are small and light, making them suitable for applications wherein size and weight are of importance, such as in mobile phones.

However, the application of internal antennas in a mobile phone puts some constraints on the configuration of the antenna element. In particular, in a portable radio communication device the space for an internal antenna arrangement is limited. These constraints may make it difficult to find a configuration of the antenna that provides for a wide operating band. This is especially true for antennas intended for use with radio signals of relatively low frequencies as the desired physical length of such antennas are large compared to antennas operating with relatively high frequencies.

One specific application operating in a relatively low frequency band is the FM radio application. The FM band is defined as frequencies between 88-108 MHz in Europe or between 76-110 MHz in the USA. Prior art conventional antenna configurations, such as loop antennas or monopole antennas, fitted within the casing of a portable radio communication device will result in unsatisfactory operation in that the antenna either has too bad performance over a sufficiently wide frequency band or sufficient performance over a too narrow frequency band.

Instead, a conventional FM antenna for portable radio communication devices is provided in the headset wire connected to the communication device. This configuration with a relatively long wire permits an antenna length that is sufficient also for low frequency applications.

It would be advantageous to have an antenna solution where a user could alternate between using an internal FM antenna and an external FM antenna. Various examples of switch solutions are given below.

EP 1 168 487 describes an antenna switch used for switching between an internal and an external antenna for providing signals from either of the antennas to a filter and amplifier. The switch is forced to select the external antenna when this is connected to the switch.

US 6 115 585 also describes antenna switches that are used for switching between an internal and an external antenna for providing signals from either of the antennas to a filter and amplifier stage.

WO 2006/013843 likewise describes an antenna switch, which switches between an internal loop antenna and an earphone cable based on detected received signal intensity.

JP 63 179669 describes a rod antenna that is connected to an RF amplifier circuit block and an external antenna pluggable into an external input jack. The external input jack includes a change over switch and the RF amplifier circuit block is connected to this switch. The switch is in turn connected to a tuner block. As an external antenna is connected to the jack, that antenna is connected to the tuner instead of the rod antenna.

WO 2004/084427 also describes a switching solution for switching in an external antenna instead of an ordinary antenna.

A simple switch solution is however not feasible with active antennas due to parasitic capacitance and inductance in a conventional 50 Ohms switch which decrease the performance of the antennas. Such a switch arrangement also decreases the performance of the internal antenna due to increase in noise figure.

### SUMMARY OF THE INVENTION

An object of the present invention is to provide an internal antenna device for use in a portable radio communication device, which operates with either an internal antenna element or an external antenna element, depending on operating conditions and user preferences.

The invention is based on the realization that a combination of external and internal radiating antenna elements is possible with an active antenna device.

According to the present invention there is provided an antenna device for a portable radio communication device adapted for receiving radio signals in at least a first operating frequency band, said antenna device comprising: a first radiating element connectable to a receiver device for radio signals, the antenna being characterized by a filter and amplifier stage interconnecting the first radiating element and the receiver device for radio signals, a second radiating element connectable to a connector portion connected to the filter and amplifier stage, wherein in a first mode of operation, the second radiating element is connected to the connector portion, and in a second mode of operation, the second radiating element is disconnected from the connector portion.

A portable radio communication device comprising such an antenna device is also provided.

The antenna device according to the invention can thus operate depending on operating conditions and user preferences.

In a preferred embodiment, a sensor is arranged for sensing whether the second radiating element is connected to the connector, wherein the sensor controls the operation of an amplifier of the filter and amplifier stage. The current consumption can thereby be kept to a minimum,

Further preferred embodiments are defined in the dependent claims.

### BRIEF DESCRIPTION OF DRAWINGS

The invention is now described, by way of example, with reference to the accompanying drawings, in which:
FIG. 1 is a schematic diagram showing an antenna device according to the invention connected to an FM receiver circuit;
FIG. 2 is a diagram showing a first embodiment of an antenna device according to the invention;
FIG. 3 is a diagram showing in more detail the antenna device shown in FIG. 2;
FIG. 4 is a diagram showing a second embodiment of an antenna device according to the invention;
FIG. 5 is a diagram showing a third embodiment of an antenna device according to the invention;
FIG. 6 is a diagram showing a fourth embodiment of an antenna device according to the invention; and
FIG. 7 is a perspective partially cut-away view of an antenna device according to the invention mounted in a portable radio communication device.

### DETAILED DESCRIPTION OF THE INVENTION

In the following, a detailed description of preferred embodiments of an antenna device and a portable radio communication device according to the invention will be given.

In the following description and claims, the term radiating element is used. It is to be understood that this term is intended to cover electrically conductive elements arranged for receiving radio signals.

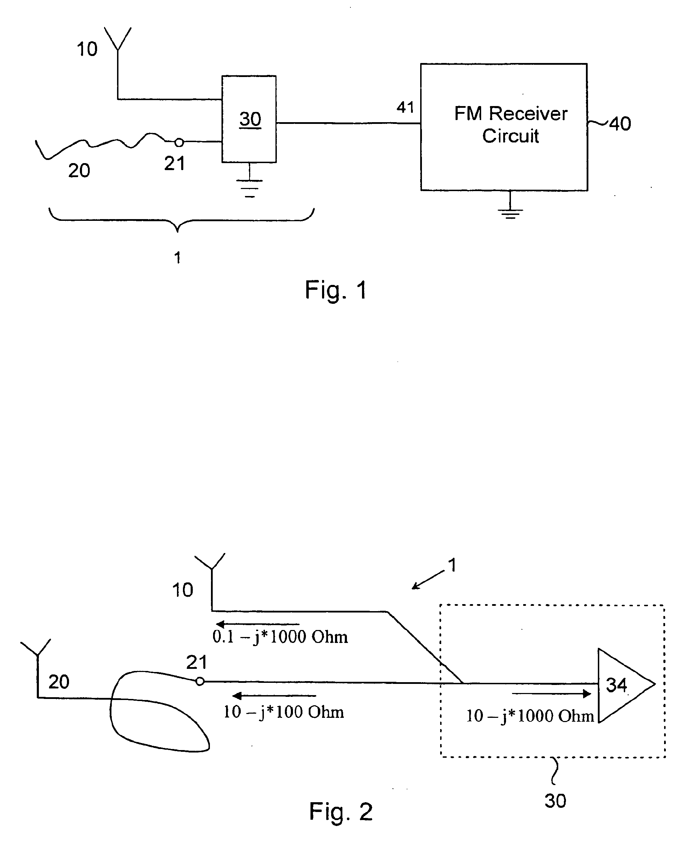

First with reference to FIG. 1, the general configuration of an antenna device 1 according to the invention is shown. It comprises a first radiating element 10 in the form of a non-resonant piece of electrically conductive material, such as sheet metal or flex film. An example of the size thereof is 30 times 10 millimeters, placed on the back cover of a portable radio communication device, and thus constitutes an internal antenna radiator.

The antenna device 1 also comprises a second radiating element 20 in the form of an external cable, preferably an external headset cable but also other cables are possible. The second radiating element 20 is connectable to a connector 21 on the communication device, where the antenna device is provided.

The first radiating element 10 and during operation the second radiating element 20 are connected to a filter and amplifier stage 30 arranged to block signals having a frequency above the operating frequency band and to allow signals in the operating frequency band. It is preferred that the filter acts as a band pass filter for signals in the operating frequency band. In the case of operation in the FM band, the pass band is between 88-108 MHz in Europe or between 76-110 MHz in the USA.

A function of the filter is also to act as ESD protection circuit, effectively blocking the major part of ESD pulse spectrum. The filter also eliminates or at least reduces interference from electro magnetic interference (EMI) signals and possibly signals from other antennas provided in the same radio communication device, such as cellular GSM antennas operating at frequencies well above the FM antenna.

The filter and amplifier stage 30 is also arranged for amplifying signals received by the radiating elements 10, 20.

Signals received, filtered and amplified by the antenna device 1 are supplied to an FM receiver circuit 40, which could be a conventional circuit manufactured by Philips Semiconductors and sold under the name HVQFN40. The FM receiver circuit comprises an RF input 41, to which the amplifier 30 is connectable.

It is preferred that the filter and amplifier stages are provided relatively close to the radiating element 10 and the connector 21 in order to minimize parasitic effects and interference from external sources.

A first embodiment implementing the general idea expressed in FIG. 1 will now be described with reference to FIG. 2. It is here seen that both the first internal radiating element 10 and the second external radiating element 20 are connected directly to the filter and amplifier stage 30 by means of an interconnection.

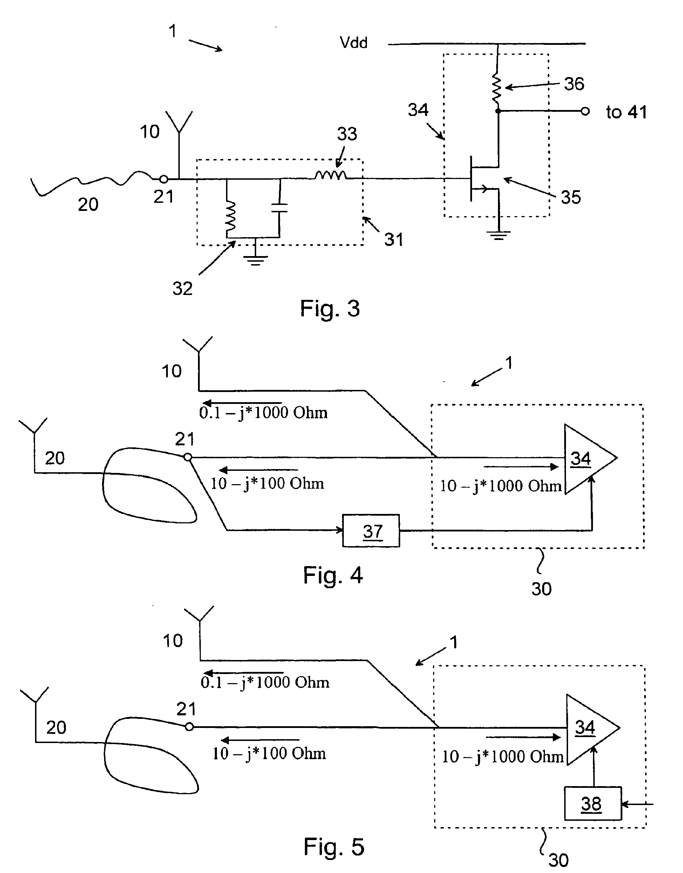

A detailed diagram of the implementation of the first embodiment is shown in FIG. 3. The filter and amplifier stage 30 is here implemented with a filter in the form of a grounded LC circuit 32 comprising an inductor and a capacitor connected in parallel and between the feeding portion 21 and ground. In one embodiment, the inductance of inductor is approximately 40 nH and the capacitance of capacitor is approximately 60 pF. A low-pass filter 33 comprises in the preferred embodiment a series inductor connected in the RF signal path before or after the band pass filter 32. A preferred inductance value of inductor is in the range of 50-200 nH, and more preferably in the order of 100 nH.

The amplifier 34 of the filter and amplifier stage 30 comprises a field effect transistor (FET) 35 with the gate connected to the filter 31, the source connected directly to ground and the drain connectable to the input 41 of the FM receiver circuit 40. There is also a load resistor 36 connected between the drain of the transistor 31 and the feed voltage Vdd.

In order for the antenna device 1 to operate, the transistor preferably has a minimum noise figure below 1 dB and a gain above 15 dB in the operating frequency band. Also, it is preferred that the transistor has a noise resistance Rn of less than 10 Ohms in order to achieve highest possible signal reception quality for arbitrary antenna configurations.

Typical impedance values for the first and second radiating elements 10, 20 are shown in FIG. 2. These values are given as examples only but show that the impedance of the first radiating element 10, i.e., the internal antenna element, is substantially higher than the impedance of the second radiating element 20, i.e., the headset cable or the like. In the example given in FIG. 2 the impedance of the first radiating element is in the order of ten times the impedance of the second radiating element. This means that the first radiating element does not substantially change or load the second radiating element. The second radiating element 20 will therefore operate with essentially the same performance as if the first radiating element were not connected to the same filter and amplifier block 30.

If the second radiating element, such as a headset cable, is disconnected from the connector 21, the first, i.e., internal radiating element operates as the radiating element of the antenna device 1.

The performance of the antenna device operating with the second radiating element connected to the connector 21 is considerably improved, since it operates in active mode.

A second embodiment of an antenna device according to the invention will now be described with reference to FIG. 4. Like the above described first embodiment, this antenna device comprises a first radiating element 10 and a second radiating element 20 connected to a filter and amplifier stage 30. In this embodiment, however, a sensor 37 is provided for sensing whether the second radiating element 20 is connected to the connector 21 or not. This sensor 37 preferably comprises a switch and resistors etc. (not shown) to provide an output signal which varies depending on whether the second radiating element is connected or disconnected.

The sensor controls the operation of the amplifier 34 so that the amplifier operates with a higher gain level if the second radiating element 20 is disconnected and lower gain level if the second radiating element 20 is connected. By adjusting the gain to a lower level during operation with the second radiating element, which has better reception characteristics than the first antenna element, the current consumption is kept to a minimum, such as 1 mA.

A third embodiment of an antenna device according to the invention will now be described with reference to FIG. 5. Like the above described first and second embodiments, this antenna device comprises a first radiating element 10 and a second radiating element 20 connected to a filter and amplifier stage 30. In this embodiment, however, an automatic gain control (AGC) circuit 38 is provided adjusting the gain of the amplifier 34. This AGC circuit has an input connected to an AGC output (not shown) on the FM receiver circuit 40 and which is conventionally provided on commercially available FM receiver circuits. Like in the second embodiment this configuration minimizes the current consumption when the second radiating element is connected..

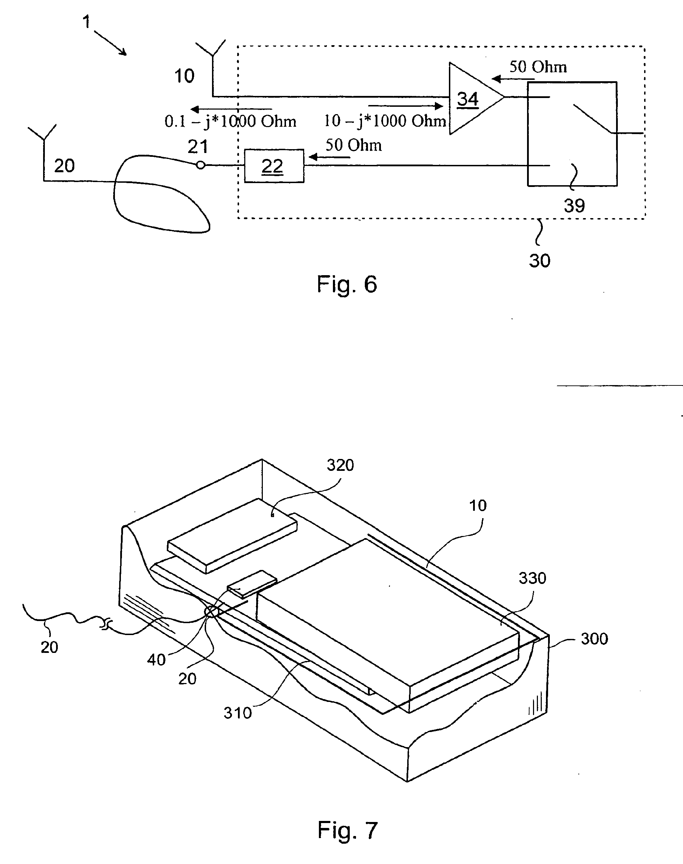

A fourth embodiment of an antenna device according to the invention will now be described with reference to FIG. 6. Like the above described embodiments, this antenna device comprises a first radiating element 10 and a second radiating element 20 connected to a filter and amplifier stage 30. However, in this embodiment the antenna device comprises a matching circuit 22 to which the second radiating element, i.e., the headset cable, is connected. This matching circuit matches the second radiating element to a desired impedance value called for by the configuration of the FM receiver circuit 40, preferably 50 Ohms. There is an optional switch 39, the output of which is connectable to the input 41 of the FM receiver circuit 40. A first input of the switch 39 is connected to the output of the amplifier 34 while a second input of the switch 39 is connected to the output of the matching circuit 22. This switch prevents loading of the second radiating element 20 when it operates in passive mode.

An alternative to use a switch is simply to interconnect the outputs of the matching circuit 22 and the amplifier 34.

The fourth embodiment thus operates as follows. When the second radiating element 20 is connected to the connector 21, it operates in passive mode, i.e., without any preamplification etc. This means that essentially no current is consumed when the antenna device operates with the second radiating element connected. With the second radiating element 20 disconnected, the antenna device 1 operates in active mode, i.e., signals received by the first radiating element are amplified by the amplifier 34 and forwarded to the FM receiver circuit 40.

A preferred position of the antenna device according to the invention as described above with reference to FIGs. 1-6 will now be described with reference to FIG. 7, wherein the general outlines of the casing of a portable radio communication device 300, such as a mobile phone, is depicted. The casing is shown partially cut away so as to not obscure the position of the antenna device, which could be any of the devices described with reference to FIGS 1-6.

A printed circuit board (PCB) 310 is provided in the casing, having the circuits (not shown) conventionally found in a mobile phone. On the PCB there is also mounted the FM receiver circuit 40. In the upper portion of the casing there is provided an antenna radiating element 320 for receiving and transmitting RF signals for a cellular mobile phone system, such as a GSM system.

A battery package 330 is also provided towards the back of the casing 300. This battery package is connected to the PCB by means of connectors (not shown). The first internal radiating element 10 is preferably placed on the back cover. This radiating element can comprise a thin stripe going around the battery. When the back cover is made of metal, it can directly be utilized as the FM antenna radiator element. A headset cable 20 is provided as the second external radiating element.

Preferred embodiments of an antenna device according to the invention have been described. However, the person skilled in the art realizes that these can be varied within the scope of the appended claims without departing from the inventive idea.

It is realized that the shape and size of the antenna device according to the invention can be varied within the scope defined by the appended claims. Thus, the exact antenna configurations can be varied so as to correspond to the shape of the radio communication device, desired performance etc.

The above-described embodiments of an antenna device according to the invention have been described as antenna devices adapted for reception of radio signals in the FM frequency band. However, other applications are also possible, such as use for digital video broadcasting (DVB) signals in the frequency range of about 400-800 MHz.

Although an antenna device for a portable radio communication device has been described with reference to its use in a mobile phone, it will be appreciated that the inventive idea is also applicable to other portable radio communication devices, also devices that are portable but primarily intended for stationary use. Examples thereof could be small clocks, such as travel alarm clocks, TV receivers, or game consoles. Yet a possible application of the antenna device according to the invention is in personal digital assistants (PDAs), MP3 and CD players, FM radio receivers, and laptop computers. A further application is in cars. Thus, the term portable radio communication device should be construed in a broad sense.

The filter stage 31 has been described as a band pass filter. It will be appreciated that it could also be provided as low pass filters blocking signals having a frequency above the operating frequency band and allowing signals in the operating frequency band.

## Claims

1. An antenna device for a portable radio communication device adapted for receiving radio signals in at least a first operating frequency band, said antenna device comprising:
- a first radiating element (10) connectable to a receiver device for radio signals (40),
- a filter and amplifier stage (30) interconnecting the first radiating element and the receiver device for radio signals (40),
- a second radiating element (20) connectable to a connector portion (21) connected to the filter and amplifier stage (30), wherein
- in a first mode of operation, the second radiating element is connected to the connector portion (21), and
- in a second mode of operation, the second radiating element is disconnected from the connector portion (21),
**characterized by**
- an interconnection between the first radiating element (10) and the connector (21),
- wherein the impedance of the first radiating element (10) is substantially higher than the impedance of the second radiating element (20).

2. The antenna device according to claim 1, further comprising an amplifier (34) of the filter and amplifier stage (30).

3. The antenna device according to claim 2, further comprising an automatic gain control circuit (38) for adjusting the gain of the amplifier (34), wherein the automatic gain control circuit has an input connectable to an automatic gain control output on an FM receiver circuit.

4. The antenna device according to claim 2 or 3, further comprising a sensor (37) for sensing whether the second radiating element (20) is connected to the connector (21), wherein the sensor controls the operation of the amplifier (34) so that the amplifier operates with a higher gain level if the second radiating element is disconnected and lower gain level if the second radiating element is connected.

5. The antenna device according to any of claims 1-4, wherein the filter and amplifier stage (30) comprises a band pass filter (32).

6. A portable radio communication device comprising an antenna device according to claim 1.

## Patentansprüche

1. Antennenvorrichtung für eine tragbare Funkkommunikationsvorrichtung, angepasst zum Empfangen von Funksignalen in mindestens einem ersten Frequenzband, wobei die Antennenvorrichtung umfasst:
- ein erstes Strahlerelement (10), das an eine Empfangsvorrichtung für Funksignale (40) anschließbar ist,
- eine Filter- und Verstärkerstufe (30), die das erste Strahlerelement und die Empfangsvorrichtung für Funksignale (40) miteinander verbindet,
- ein zweites Strahlerelement (20), das an einen Anschlussabschnitt (21) anschließbar ist, das an die Filter- und Verstärkerstufe (30) angeschlossen ist, wobei
- in einem ersten Betriebsmodus das zweite Strahlerelement an den Anschlussabschnitt (21) angeschlossen ist, und
- in einem zweiten Betriebsmodus das zweite Strahlerelement von dem Anschlussabschnitt (21) getrennt ist,
**gekennzeichnet durch**
- eine gegenseitige Verbindung zwischen dem ersten Strahlerelement (10) und dem Anschlussstück (21),
- wobei die Impedanz des ersten Strahlerelements (10) im Wesentlichen höher ist, als die Impedanz des zweiten Strahlerelements (20).

2. Antennenvorrichtung nach Anspruch 1, überdies umfassend einen Verstärker (34) der Filter- und Verstärkerstufe (30).

3. Antennenvorrichtung nach Anspruch 2, überdies umfassend eine automatische Verstärkungssteuerschaltung (38) zum Anpassen der Verstärkung des Verstärkers (34), wobei die automatische Verstärkungssteuerschaltung einen Eingang aufweist, der an einen automatischen Verstärkungssteuerausgang an einer FM-Empfangsschaltung anschließbar ist.

4. Antennenvorrichtung nach Anspruch 2 oder 3, überdies umfassend einen Sensor (37) zum Erfassen, ob das zweite Strahlerelement (20) an das Anschlussstück (21) angeschlossen ist, wobei der Sensor den Betrieb des Verstärkers (34) steuert, so dass der Verstärker mit einer höheren Verstärkungsleistung arbeitet, wenn das zweite Strahlerelement getrennt ist, und einer niedrigeren Verstärkungsleistung, wenn das zweite Strahlerelement angeschlossen ist.

5. Antennenvorrichtung nach einem der Ansprüche 1 - 4, wobei die Filter- und Verstärkerstufe (30) ein Bandpassfilter (32) umfasst.

6. Tragbare Funkkommunikationsvorrichtung, umfassend eine Antennenvorrichtung nach Anspruch 1.

## Revendications

1. Dispositif d'antenne pour un dispositif de communication radio portable adapté pour recevoir des signaux radio dans au moins une première bande de fréquence de fonctionnement, ledit dispositif d'antenne comprenant :
- un premier élément rayonnant (10) pouvant être connecté à un dispositif récepteur pour signaux radio (40),
- un étage de filtre et d'amplification (30) interconnectant le premier élément rayonnant et le dispositif récepteur pour signaux radio (40),
- un second élément rayonnant (20) pouvant être connecté à une portion de connecteur (21) connectée à l'étage de filtre et d'amplification (30), dans lequel
- dans un premier mode de fonctionnement, le second élément rayonnant est connecté à la portion de connecteur (21), et
- dans un second mode de fonctionnement, le second élément rayonnant est déconnecté de la portion de connecteur (21),
**caractérisé par**
- une interconnexion entre le premier élément rayonnant (10) et le connecteur (21),
- dans lequel l'impédance du premier élément rayonnant (10) est sensiblement supérieure à l'impédance du second élément rayonnant (20).

2. Dispositif d'antenne selon la revendication 1, comprenant en outre un amplificateur (34) de l'étage de filtre et d'amplification (30).

3. Dispositif d'antenne selon la revendication 2, comprenant en outre un circuit de commande automatique de gain (38) pour ajuster le gain de l'amplificateur (34), dans lequel le circuit de commande automatique de gain présente une entrée pouvant être connectée à une sortie de commande automatique de gain sur un circuit de récepteur FM.

4. Dispositif d'antenne selon la revendication 2 ou 3, comprenant en outre un détecteur (37) pour détecter si le second élément rayonnant (20) est connecté au connecteur (21), dans lequel le détecteur commande le fonctionnement de l'amplificateur (34) de sorte que l'amplificateur fonctionne avec un niveau de gain supérieur si le second élément rayonnant est déconnecté et un niveau de gain inférieur si le second élément rayonnant est connecté.

5. Dispositif d'antenne selon l'une quelconque des revendications 1-4, dans lequel l'étage de filtre et d'amplification (30) comprend un filtre passe-bande (32).

6. Dispositif de communication radio portable comprenant un dispositif d'antenne selon la revendication 1.
